# EUROPÄISCHE PATENTSCHRIFT

(11) **EP 0 353 514 B1**
(45) Veröffentlichungstag und Bekanntmachung des Hinweises auf die Patenterteilung: **05.05.1993**
(21) Anmeldenummer: 89112811.8
(22) Anmeldetag: 13.07.1989
(51) Int. Cl.: H04N 5/783

(54) **Videorecorder mit einer Synchronisationsanordnung**
Video tape recorder with a syncrhonizing arrangement
Magnétoscope avec un dispositif de synchronisation

(30) Priorität: 30.07.1988 DE 3826004
(43) Veröffentlichungstag der Anmeldung: 07.02.1990
(73) Patentinhaber: Nokia (Deutschland) GmbH, 75175 Pforzheim (DE)
(72) Erfinder: Apitz, Siegfried, D-7530 Pforzheim (DE)

(56) Entgegenhaltungen:
- EP-A- 0 200 203
- DE-A- 2 936 263
- DE-A- 3 714 128
- GRUNDIG TECHNISCHE INFORMATIONEN, 2/1973, Fürth (DE) W. KORNHAAS "Videorecorder BK 401; Beschreibung der Einzelbildspeicherung" Seiten 148-150

## Beschreibung

Die Erfindung betrifft einen Videorecorder nach dem Oberbegriff des Anspruchs 1.

Ein aus der DE-Zeitschrift "Funkschau" 1984, Heft 14, Seiten 53 bis 56, bekannter Videorecorder tastet zur Wiedergabe von Fernsehbildern die quasi nebeneinander liegenden, jeweils ein Halbbild eines Fernsehbildes umfassenden Halbbildspuren eines bandförmigen Videosignalträgers ab. Das Videoband ist bei dem bekannten Videorecorder um ein Kopfrad geschlungen, das zwei die Halbbildspuren abtastende Videoköpfe enthält. Eine Synchronisationsanordnung verknüpft den Transport des Videobandes derart mit der Umdrehung des Kopfrades, daß ein bestimmter Videokopf des Kopfrades stets die Halbbildspur des ersten Halbbildes und der andere Videokopf danach die Halbbildspur des zweiten Halbbildes eines Fernsehbildes abtasten. Diese Synchronisation erfolgt anhand von Synchronisationssignalen auf dem Videoband.

Bei einer Standbildwiedergabe vom Videosignalträger bleibt der Videosignalträger unbewegt, während die Videoköpfe zur Abtastung wiederholt abwechselnd über die zugehörigen Halbbildspuren geführt werden. Dadurch wird abwechselnd das erste und das zweite Halbbild als Fernsehbild wiedergegeben. Ist in der Fernsehbildfolge ein schneller Wechsel einer Bildinformation dargestellt, enthalten die beiden Halbbilder eines einzigen Fernsehbildes an den Stellen schnell bewegter Bildinformation deutlich merkbare Informationsunterschiede, die sich bei der Standbildwiedergabe oder bei der Wiedergabe mit einer langsamen Bildfolgegeschwindigkeit, einer sogenannten Zeitlupe, durch einen störenden Flattereffekt an den bewegten Bildstellen bemerkbar machen.

Um dieses Bewegungsflattern zu verhindern ist es bekannt, unmittelbar beim zweiten Videokopf einen dritten Videokopf anzubringen, der anstelle der vom zweiten Videokopf abgetasteten Halbbildspur des zweiten Halbbildes wiederum die Halbbildspur des ersten Halbbildes abtastet. Diese Maßnahme erfordert jedoch nicht nur einen dritten Videokopf, der in unmittelbarer Nähe des zweiten Videokopfes angebracht werden muß, sondern auch einen dritten Kopfverstärker und einen weiteren Kopfumschalter. Außerdem wird durch den Verlust des zweiten Halbbildes die horizontale Auflösung des wiedergegebenen Fernsehbildes halbiert.

Andererseits werden derzeit in Fernsehübertragungen und insbesondere bei vorbespielten Leihkassetten in großem Umfang Filme übertragen, deren Bildfolge mit 25 Bildern in der Sekunde halb so groß ist wie die Bildfolge der Fernsehhalbbilder in der gleichen Zeit. Dadurch müssen bei einer Fernsehübertragung die Filmbilder zweimal aufeinanderfolgend übertragen werden. Das heißt aber, daß eine aus Filmbildern bestehende Videoaufzeichnung, bei der jedes Filmbild ein Fernsehvollbild mit zwei identischen Fernsehhalbbildern umfaßt, jeweils zwei nebeneinander liegende Halbbildspuren mit identischem Bildinhalt enthält.

Ausgehend von dieser Erkenntnis liegt der Erfindung die Aufgabe zugrunde, bei einem Videorecorder der eingangs angegenenen Art das Bewegungsflattern bei Standbildwiedergabe oder bei der Wiedergabe einer Bildfolge mit einer geringen Wiedergabegeschwindigkeit wenigstens bei einer Bildübertragung der soeben geschilderten Art zu verhindern, ohne daß hierfür ein weiterer Videokopf erforderlich ist. Diese Aufgabe wird nach der Erfindung durch die im kennzeichnenden Teil des Anspruchs 1 angegebenen Merkmale gelöst.

Die Erfindung nutzt diese Erkenntnis in vorteilhafter Weise aus und berücksichtigt, daß bei einer derartigen Fernsehübertragung von Filmbändern nicht darauf geachtet ist, daß die Halbbildspuren mit dem identischen Bildinhalt die beiden Halbbildspuren des Videospurpaares eines Fernsehbildes sind. Die Halbbildspuren mit identischem Bildinhalt können auch benachbarte Halbbildspuren zweier unterschiedlicher, benachbarter Fernsehbilder sein.

Dazu ist nur ein geringer zusätzlicher Schaltungsaufwand erforderlich. Außerdem werden stets zwei benachbarte Halbbildspuren zur Wiedergabe eines Fernsehbildes abgetastet, so daß für die Bildwiedergabe keine Bildinformation verloren geht und die Fernsehbilder ohne Verlust an Bildauflösung flatterfrei wiedergegeben werden.

Die Unteransprüche kennzeichnen vorteilhafte Ausgestaltungen der Erfindung, die nachfolgend anhand einiger vorteilhafter Ausführungsbeispiele näher erläuter wird. In der zugehörigen Zeichnung zeigen
- Fig. 1: ein Blockschaltbild eines Ausschnittes der Anordnung der Bandabtastung eines Videorecorders,
- Fig. 2: einen Ausschnitt eines Videobandes in schematischer Darstellung mit einer schematischen Darstellung der zugehörigen Videospurpaarungen,
- Fig 3: eine schematische Darstellung der Wiedergabe eines Standbildes aus zwei Fernsehhalbbildern eines Videospurpaares,
- Fig. 4: eine schematische Darstellung einer Wiedergabe eines Standbildes aus einer aus Filmbildern hergestellten und aufgezeichneten Fernsehsendung,
- Fig. 5: ein Blockschaltbild eines Ausschnittes einer weiteren Anordnung der Bandabtastung eines Videorecorders.

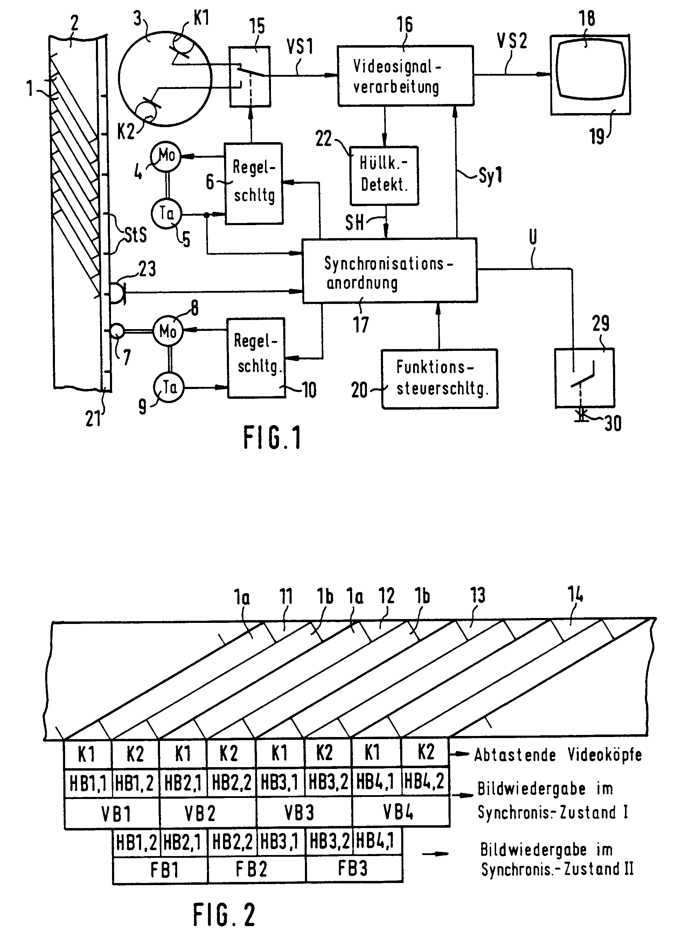

Bei dem in Fig. 1 ausschnittweise in einem Blockschaltbild dargestellten Videorecorder werden die Halbbildspuren 1 eines Videobandes 2 von einem ersten Videokopf K1 und einem zweiten Videokopf K2 eines Kopfrades 3 abgetastet. Das Kopfrad wird von einem Motor 4 angetrieben, dessen Drehzahl an einem Umdrehungsgeber 5 gemessen und mittels einer Regelschaltung 6 geregelt wird. Das Videoband 2 wird von einer Capstanwelle 7 über das Kopfrad 3 transportiert. Die Capstanwelle 7 ist von einem Motor 8 angetrieben, dessen Drehzahl von einem Umdrehungsgeber 9 an eine Regelschaltung 10 ausgegeben wird und von der Regelschaltung 10 eingestellt wird.

Das Videoband 2 enhält für jedes aufgezeichnete Fernsehbild zwei Halbbildspuren 1a und 1b, die ein Videospurpaar 11 für ein aufgezeichnetes, aus den beiden Halbbildern HB1,1 und HB1,2 bestehendes Fernsehbild VB1 bilden, wie in Fig. 2 schematisch dargestellt ist. Jeder ersten Halbbildspur 1a ist der erste Videokopf K1 zugeordnet, der nur zur Abtastung einer ersten Halbbildspur 1a eines Videospurpaares 11, 12, 13 oder 14 geeignet ist, während der zweite Videokopf K2 nur zur Abtastung der zweiten Halbbildspur 1b der Videospurpaare geeignet ist, wie ebenfalls in Fig. 2 schematisch dargestellt ist.

Die von den Halbbildspuren 1 (Fig. 1) des Videobandes 2 abgetasteten Videosignale gelangen über einen von der ersten Regelschaltung 6 gesteuerten Kopfumschalter 15 in eine Videosignalverarbeitungsschaltung 16, die die abgetasteten Videosignale VS1 zusammen mit von einer Synchronisationsanordnung 17 erzeugten Synchronsignalen SY1 in Videosignale VS2 für die Wiedergabe auf dem Bildschirm 18 eines Fernsehgerätes 19 umsetzt.

Die Synchronisationsanordnung 17 bildet die Betriebssollwerte für die beiden Regelschaltungen 6 und 10, abhängig vom Betriebszustand des Videorecorders, der im dargestellten Ausführungsbeispiel von der Einstellung einer Funktionssteueranordnung 20 bestimmt ist, und abhängig von Kennungssignalen, die die beiden Halbbildspuren 1a und 1b eines Videospurpaares kennzeichnen. Im dargestellten Ausführungsbeispiel kennzeichnen beispielsweise Steuersignal STS in einer Steuerspur 21 des Videobandes 2 jeweils die Position der ersten Halbbildspur 1a eines Videospurpaares 11, 12, 13, 14, usw. eines Fernsehbildes VB1, VB2, VB3, VB4, usw. zum ersten Videokopf K1. Dieses Signal StS wird von einem Steuersignalkopf 23 von der Steuersignalspur 21 des Videobandes 2 abgetastet und der Synchronisationsanordnung 17 zugeführt.

Eine andere Erkennung des Ranges der Halbbildspur eines Videospurpaares erfolgt durch einen Hüllkurvendetektor 22, der das übertragene Videosignal detektiert und daraus ein den Rang der gerade abgetasteten Halbbildspur innerhalb des Videospurpaares kennzeichnendes Kennungssignal SH bildet.

Die Synchronisation der Bandposition des Videobandes 2 zu den Videoköpfen K1 und K2 und der Videosignalverarbeitungsschaltung 16 durch die Synchronisationsanordnung 17 erfolgt in der Weise, daß die Videoköpfe K1 und K2 die ihnen zugehörigen Halbbildspuren 1a und 1b abtasten, und in der Videosignalverarbeitungsschaltung 16 die abgetasteten Videosignale eines Videospurpaares 11 oder 12 so zu Fernsehhalbbildern umgewandelt werden, daß die zugehörigen Fernsehhalbbildpaare HB1,1 und HB1,2 oder HB2,1 und HB2,2 im Fernsehgerät 19 ein wiedergebbares Fernsehbild VB1 oder VB2 ergeben, wie in Fig 2 schematisch dargestellt ist.

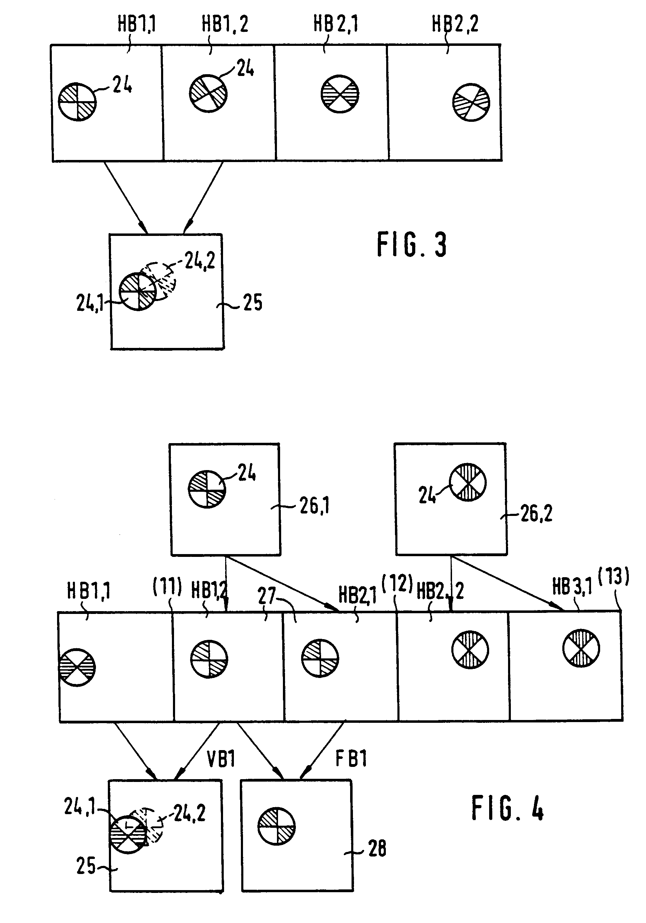

Im Standbildbetriebszustand des Videorecorders dreht sich nur die Kopftrommel 3, während das Videoband 2 stillsteht. Damit bewegt sich der erste Videokopf K1 in jeder ersten halben Umdrehung des Kopfrades 3 beispielsweise über die erste Halbbildspur 1a des Videospurpaares 11 und der zweite Videokopf K2 während jeder zweiten halben Umdrehung des Kopfrades über die zweite Halbbildspur 1b des Videospurpaares 11, das gesteuert von der Synchronisationsanordnung 17, in die richtige Abtastposition zu den beiden Videoköpfen K1 und K2 gebracht wurde. Treten zwischen den beiden Fernsehhalbbildern HB1,1 und HB1,2 des Videospurpaares 11 merkliche Unterschiede einzelner Bildteile 24 infolge einer schnellen Änderung dieser Bildteile 24 auf, beispielsweise bei der Wiedergabe eines fliegenden Balles, wie in der Fig. 3 dargestellt ist, dann wird dieses Bildteil 24 bei der Wiedergabe des Standbildes 25 des Videospurpaares während der Wiedergabe des ersten Halbbildes HB1,1 in einer ersten Position 24,1 und während der Wiedergabe des zweiten Halbbildes HB1,2 des Videospurpaares 11 in einer zweiten Position 24,2 dargestellt. Für den Betrachter wirkt die Darstellung dieses Bildteiles 24 wie ein Flattern dieses Bildteiles.

Die auf Videosignalträger, insbesondere Videobänder aufgezeichneten Videosendungen stammen in großem Umfang von Filmen. Da die Filmbildgeschwindigkeit nur halb so groß ist wie die Geschwindigkeit der Bildfolge der Übertragung der Fernsehhalbbilder, wird bei einer Fernsehübertragung ein Filmbild 26 durch zwei aufeinander folgende identische Fernsehhalbbilder 27 übertragen, wie in Fig. 4 schematisch dargestellt ist. Sind die beiden identischen Fernsehhalbbilder 27 in den beiden Halbbildspuren 1a und 1b eines Videospurpaares 11 aufgezeichnet, tritt an den Stellen bewegter Bildteile 24 kein Bewegungsflattern auf.

Sind die beiden identischen Fernsehhalbbilder 27 HB1,2 und HB2,1 jedoch in Halbbildspuren unterschiedlicher Videospurpaare 11 und 12 aufgezeichnet, dann tritt bei der Wiedergabe eines Standbildes 25 des Filmbildes 26 ein erhebliches Flattern bewegter Bildteile 24 auf, das doppelt so groß ist wie das Bewegungsflattern bei der Übertragung direkt vom bewegten Objekt und somit besonders störend auffällt.

Deshalb ist die Synchronisationsanordnung 17 durch ein Umschaltesignal U in einen zweiten Synchronisationszustand umschaltbar, in dem die Synchronisationsanordnung die Bandposition des Videobandes so verändert und einstellt, daß der zweite Videokopf K2 die zweite Halbbildspur 1b eines ersten Videospurpaares 11 abtastet und danach der erste Videokopf K1 die erste Halbbildspur 1a des darauffolgenden Videospurpaares 12 abtastet. Außerdem stellt die Synchronisationsanordnung 17 in ihrem zweiten Synchronisationszustand die Videosignalverarbeitungsschaltung 16 so ein, daß sie die Videosignale VS2 für ein Fernsehbild FB1 aus dem zweiten Fernsehhalbbild HB1,2 des ersten abgetasteten Videospurpaares 11 und des ersten Fernsehhalbbildes HB2,1 des danach abgetasteten zweiten Videospurpaares 12 bildet. Dieses Fernsehbild FB1 ist in Fig. 4 durch das Bild 28 dargestellt.

Das Umschaltesignal U, das die Synchronisationsanordnung 17 in den zweiten Synchronisationszustand schaltet, wird in dem in Fig. 1 dargestellten Ausführungsbeispiel eines Videorecorders durch einen elektronischen Wechselschalter 29 erzeugt, der mittels einer Taste 30 des Videorecorders umgeschaltet wird. Ein Benutzer des Videorecorders betätigt die Taste 30 dann, wenn er bei der Wiedergabe eines Standbildes oder einer Wiedergabe in Zeitlupengeschwindigkeit ein Flattern von wiedergegebenen Bildteilen wahrnimmt.

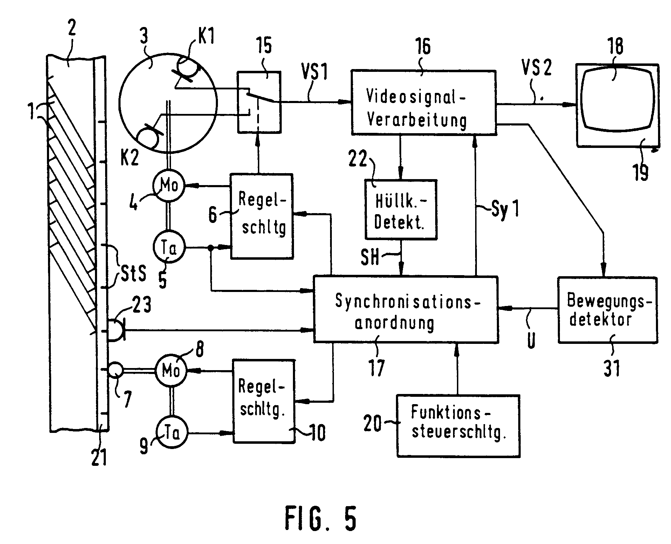

In einem weiteren Ausführungsbeispiel eines Videorecorders, das in Fig. 5 dargestellt ist und für die der Fig. 1 entsprechenden Teile die gleichen Bezugszeichen enthält, wird das Umschaltesignal U zur Einstellung des zweiten Synchronisationszustandes der Synchronisationsanordnung 17 von einem Bewegungsdetektor 31 erzeugt, der bewegte Bildteile im übertragenen Videosignal VS1 erkennt und im Betriebszustand der Standbildwiedergabe oder einer Zeitlupenwiedergabe des Videorecorders bei überschreiten einer bestimmten Bewegungsgeschwindigkeit eines bewegten Bildteiles das Umschaltesignal U bildet.

## Patentansprüche

1. Videorecorder mit einem Videosignalträger, auf dem für jedes Fernsehhalbbild eine abtastbare Halbbildspur vorhanden ist, und mit einer Synchronisationsanordnung, die mittels die erste oder die zweite Halbbildspur des Videospurpaares eines Fernsehbildes kennzeichnenden Signalen die Abtastung der Halbbildspuren so synchronisiert, daß ein erster Videokopf die erste Halbbildspur und ein zweiter Videokopf die zweite Halbbildspur des Videospurpaares der Fernsehbilder abtastet, **dadurch gekennzeichnet,** daß die Synchronisationsanordnung (17) in einen zweiten Synchronisationszustand schaltbar ist, der zur Abtastung eines Fernsehhalbbildpaares (27) eines Fernsehbildes (28) den zweiten Videokopf (K2) auf die zweite Halbbildspur (1b) eines ersten Videospurpaares (11) und den ersten Videokopf (K1) auf die erste Halbbildspur (1a) des auf das erste Videospurpaar folgenden Videospurpaares (12) einstellt und aus den in dieser Reihenfolge abgetasteten beiden Fernsehhalbbildern (HB1,2 und HB2,1) die Videosignale (VS2) für das zugehörige Fernsehbild (FB1) bildet.

2. Videorecorder nach Anspruch 1, dadurch gekennzeichnet, daß ein elektronischer Umschalter (29) mittels einer Schalttaste (30) in einen Schaltzustand schaltbar ist, in dem ein Umschaltesignal (U) die Synchronisationsanordnung in den zweiten Synchronisationszustand schaltet.

3. Videorecorder nach Anspruch 1, dadurch gekennzeichnet, daß ein Bewegungsdetektor (31) zur Erkennung bewegter Bildteile (24) der abgetasteten Fernsehhalbbilder (HB1,1 ...) vorgesehen ist, der im Betriebszustand der Standbildwiedergabe oder Zeitlupenwiedergabe des Videorecorders oberhalb einer bestimmten Bewegungsgeschwindigkeit bewegter Bildteile ein Umschaltesignal (U) erzeugt, das die Synchronisationsanordnung (17) in den zweiten Synchronisationszustand schaltet.

## Claims

1. Video recorder with a video signal carrier on which a scannable field track is present for each television field, and with a synchronization arrangement that, by means of the first or the second field track of the video track pair of a signal characterizing a television image, synchronizes the scanning of the field tracks so that a first video head scans the first field track and a second video head scans the second field track of the video track pair, characterized in that the synchronization arrangement (17) can be switched into a second synchronization state that, in order to scan a television field pair (27) of a television image (28), adjusts the second video head (K2) onto the second field track (1b) of a first video track pair (11) and the first video head (K1) onto the first field track (1a) of the video track pair (12) following the first video track pair, and forms, from the two television fields (HB1,2 and HB2,1) scanned in this order, the video signals (VS2) for the associated television image (FB1).

2. Video recorder according to Claim 1, characterized in that an electronic switcher (29) can be switched by means of a switch button (30) into a switching state in which a switching signal (U) switches the synchronization arrangement into the second synchronization state.

3. Video recorder according to Claim 1, characterized in that a movement detector (31) to detect moving image portions (24) of the scanned television fields (HB1, 1 ...) is provided, which, when the video recorder is in the "still" or "slow motion" reproduction mode, and when the moving image portions exceed a certain velocity, generates a switching signal (U) that switches the synchronization arrangement (17) into the second synchronization state.

## Revendications

1. Vidéo-enregistreur avec un porteur de signal vidéo sur lequel se trouve pour chaque trame d'image de télévision une piste de trame balayable, et avec une disposition de synchronisation qui synchronise moyennant des signaux caractérisant la première ou la deuxième piste de trame de la paire de pistes vidéo d'une image de télévision le balayage des pistes de trame de telle sorte qu'une première tête vidéo balaye la première piste de trame et une deuxième tête vidéo la deuxième piste de trame, **caractérisé en ce que** la disposition de synchronisation (17) est commutable dans un deuxième état de synchronisation qui règle pour le balayage d'une paire de trames (27) d'une image de télévision (28) la deuxième tête vidéo (K2) sur la deuxième piste de trame (1b) d'une première paire de pistes vidéo (11) et la première tête vidéo (K1) sur la première piste de trame (1a) de la paire de pistes vidéo (12) suivant la première paire de pistes vidéo et forme à partir des deux trames de télévision (HB1,2 et HB2,1), balayées dans cet ordre les signaux vidéo (VS2) pour l'image de télévision associée (FB1).

2. Vidéo-enregistreur selon la revendication 1, caractérisé en ce que un inverseur électronique (29) est commutable moyennant une touche de commutation (30) dans un état de commutation dans lequel un signal de commutation (U) commute la disposition de synchronisation dans le deuxième état de synchronisation.

3. Vidéo-enregistreur selon la revendication 1, caractérisé en ce que un détecteur de mouvement (31) est prévu pour déceler des parties d'image mobiles (24) des trames de télévision balayées (HB1,1 ...),générant à l'état de service de la transmission d'images immobiles ou de vues au ralenti de l'enregistreur vidéo un signal de commutation (U) au dessus d'une certaine vitesse de déplacement de parties d'image mobiles qui commute la disposition de synchronisation (17) dans le deuxième état de synchronisation.
